# EUROPÄISCHE PATENTANMELDUNG

(11) **EP 2 669 670 A1**
(43) Veröffentlichungstag der Anmeldung: **04.12.2013**
(21) Anmeldenummer: 12170480.3
(22) Anmeldetag: 01.06.2012
(51) Int. Cl.: G01N 27/90

(54) **Verfahren zum Detektieren eines Risses in Laufschaufeln im Betrieb einer Turbomaschine**

(71) Anmelder: Siemens Aktiengesellschaft, 80333 München (DE)
(72) Erfinder: Stüer, Heinrich, 45721 Haltern (DE); Deister, Frank, 47877 Willich (DE); Förster, Ingo, 45468 Mülheim/Ruhr (DE); Gloss, Daniel, 45481 Mülheim an der Ruhr (DE); Musch, Christian, 45259 Essen (DE); Truckenmüller, Frank, 44879 Bochum (DE)

(57) **Zusammenfassung**

Die Erfindung betrifft ein Verfahren zum Detektieren eines Risses in Laufschaufeln (2, 5), die an einem in einem Gehäuse (10) befindlichen Rotor (1) einer Turbomaschine, insbesondere einer Turbine angebracht sind, mit folgenden Schritten: Erzeugen eines ersten Magnetfelds, um in mindestens einer Laufschaufel (2, 5) im Betrieb der Turbomaschine einen Wirbelstrom zu induzieren; Messen des vom Wirbelstrom in der mindestens einen Laufschaufel (2, 5) induzierten zweiten Magnetfelds; Auswerten des gemessenen zweiten Magnetfelds, um einen Riss in einer der Laufschaufeln (2, 5) festzustellen; aus einer zusätzlich erfassten Phasenlage des Rotors (1) ermitteln, in welcher Laufschaufel der Riss sich befindet.

## Beschreibung

Die Erfindung betrifft ein Verfahren zum Detektieren eines Risses in Laufschaufeln im Betrieb einer Turbomaschine und ein zugehöriges System hierfür.

Bei Turbinen, insbesondere bei Dampfturbinen, besteht das Problem des sogenannten Schaufelabrisses. Dabei löst sich ein Teil oder eine ganze Schaufel vom Rotor der Turbine. Betroffen sind hiervon die am Rotor einer Turbine befestigten Laufschaufeln, welche vor allem durch die Zentrifugalkräfte hohen mechanischen Belastungen ausgesetzt sind. Hinzu kommt die regelmäßige Beaufschlagung mit Dampf, welche zu thermischen Belastungen führen kann, aber vor allem eine hohe dynamische Beanspruchung zur Folge hat. Dies führt zu einer Belastung des Materials, die letztlich zum erwähnten Schaufelabriss führen kann. Dem Schaufelabriss voraus geht ein Riss in einer Turbinenschaufel. Dieser beginnt im Regelfall zunächst als kleiner Haarriss und vergrößert sich im Laufe der Zeit mitunter relativ rasch. Dies kann innerhalb eines Tages erfolgen, kann aber auch bis zu einem Jahr dauern. Der Entstehung eines Haarrisses geht eine Ermüdung des Schaufelmaterials voraus. Bei den regelmäßigen Inspektionen einer Turbine, bei denen die Turbine abgeschaltet ist, werden die Schaufeln untersucht. Die Ermüdung des Schaufelmaterials ist dabei nicht messbar. Daher beschränkt man sich in diesem Zusammenhang auf eine Messung von Rissen in den Laufschaufeln. Problematisch hierbei ist, dass ein Riss schnell entstehen und wachsen kann, sodass trotz der Prüfungen bei der Inspektion im nachfolgenden Betrieb der Turbine ein bedenklicher Riss entstehen kann, welcher aufgrund der gegebenen Inspektionsintervalle nicht rechtzeitig erkannt wird. Bei anderen Turbomaschinen als Dampfturbinen, etwa bei Verdichtern treten entsprechende Probleme auf.

Aufgabe der Erfindung ist es daher eine verbesserte Überwachung des Materials der Laufschaufeln bereitzustellen.

Diese Aufgabe wird insbesondere mit den Merkmalen der unabhängigen Ansprüche gelöst. Vorteilhafte Ausgestaltungen finden sich in den abhängigen Ansprüchen. Die nachfolgende Beschreibung erläutert nähere Einzelheiten.

Es wurde erkannt, dass ein Verfahren zum Detektieren eines Risses in Laufschaufeln, die an einem in einem Gehäuse befindlichen Rotor einer Turbomaschine angebracht sind, bereitzustellen ist. Dieses Verfahren weist nachfolgende Schritte auf: Zunächst ist ein erstes Magnetfeld zu erzeugen, um in mindestens einer Laufschaufel im Betrieb der Turbomaschine einen Wirbelstrom zu induzieren. Sodann ist das vom Wirbelstrom in der mindestens einen Laufschaufel induzierte zweite Magnetfeld zu messen. Nun gilt es das gemessene zweite Magnetfeld auszuwerten, um einen Riss in einer der Laufschaufeln festzustellen. Schließlich gilt es aus einer zusätzlich erfassten Phasenlage des Rotors zu ermitteln, in welcher Laufschaufel der Riss sich befindet.

Diese Schritte sollen anhand nachfolgender Ausführungen klarer werden. Die Laufschaufeln einer Turbomaschine sind am Rotor der Turbomaschine montiert. Die Laufschaufeln befinden sich dabei in mehreren, senkrecht zum Rotor stehenden, Ebenen. In einer Ebene sind jeweils mehrere Laufschaufeln angebracht.

Die Schritte zum Erzeugen eines ersten Magnetfelds, um einen Wirbelstrom zu induzieren, und zum Messen des vom Wirbelstrom induzierten zweiten Magnetfelds sind im Grunde bekannte Schritte, wie sie bei handelsüblichen Wirbelstromsensoren regelmäßig vorgenommen werden. Dabei handelt es sich beim ersten Magnetfeld in der Regel um ein wechselndes Magnetfeld. Wenn eine der zu untersuchenden Laufschaufeln einen auch nur kleinen Haarriss enthält, so ändert sich der durch das erste Magnetfeld in der Laufschaufel induzierte Strom. Der Strom kann nicht durch den Riss fließen, sondern muss an ihm vorbeifließen. Dementsprechend ist das vom Wirbelstrom herrührende zweite Magnetfeld anders als bei einer Laufschaufel ohne Riss. Durch eine Auswertung des gemessenen zweiten Magnetfelds, die üblicherweise rechner- und softwaregestützt erfolgt, kann ein Riss sehr zuverlässig erkannt werden.

Um zu ermitteln, welche Laufschaufel betroffen ist, wird zusätzlich die Phasenlage des Rotors erfasst. Die Phasenlage des Rotors wird in Turbomaschinen im Regelfall ohnehin erfasst. Eine verbreitete Möglichkeit hierfür ist ein sogenannter Key Phasor. Dabei handelt es sich um eine Markierung am Umfang des Rotors. Das Vorbeilaufen dieser Markierung wird von einem auf die Markierung abgestimmten Sensor erfasst. Aus der Frequenz, wie oft die Markierung an dem Sensor vorbeiläuft, kann auf die Umdrehungsgeschwindigkeit des Rotors geschlossen werden. Zusammen mit dem bekannten Zeitpunkt des letzten Vorbeilaufens der Markierung an dem Sensor ist jederzeit die Phasenlage des Rotors bekannt. Das erfindungsgemäße Verfahren gestattet also einen auftretenden Riss im Betrieb festzustellen und zusammen mit der Bestimmung der Phasenlage des Rotors ist es auch möglich, eine Aussage darüber zu treffen, welche Laufschaufel betroffen ist. So kann gegebenenfalls die Turbomaschine abgeschaltet werden und schnell eine weitergehende Untersuchung durchgeführt werden.

In einer Ausgestaltung des Verfahrens wird eine Messung des zweiten Magnetfelds der Laufschaufeln ohne Riss vorgenommen, um ein Referenzsignal zu erhalten. So kann etwa nach dem Einbau eine neue Turbomaschine oder unmittelbar nach einer Inspektion davon ausgegangen werden, dass die Laufschaufeln keinen Riss aufweisen. Das dabei gewonnene Signal für das zweite Magnetfeld kann als Referenzsignal angesehen werden. Sollten die verschiedenen unbeschädigten Laufschaufeln jeweils etwas unterschiedliche zweite Magnetfelder hervorrufen, so würde dies im Referenzsignal berücksichtigt.

In einer weiteren Ausgestaltung des Verfahrens wird das Referenzsignal für verschiedene Turbomaschinendrehzahlen aufgenommen, sodass ein Vergleich des bei einer gewählten Turbomaschinendrehzahl gemessenen zweiten Magnetfelds mit einem Referenzsignal, das bei der gewählten Turbomaschinendrehzahl gewonnen worden ist, möglich ist. Es versteht sich, dass hierbei keine völlige Identität der Turbomaschinendrehzahl von Referenzsignal und tatsächlicher Messung erforderlich ist. Insoweit aber die Turbomaschinendrehzahl das gemessene zweite Magnetfeld beeinflusst, so wird die Auswertung verbessert, wenn ein Vergleich mit einem Referenzsignal bei derselben, zumindest bei einer ähnlichen Turbomaschinendrehzahl, vorgenommen wird.

In einer weiteren Ausgestaltung des Verfahrens wird das gemessene zweite Magnetfeld einer Laufschaufel mit dem gemessenen zweiten Magnetfeld mindestens einer weiteren Laufschaufel verglichen. Dies beruht auf der im Regelfall trotz oben geschilderter Ausführungen zutreffenden Annahme, dass die gemessenen zweiten Magnetfelder von intakten Laufschaufeln, die sich in einer Ebene senkrecht des Rotors befinden, weitgehend identisch sind. Damit kann aus dem Vergleich der gemessenen zweiten Magnetfelder eine Aussage getroffen werden, ob eine der Laufschaufeln einen Riss aufweist. Inwieweit die jeweiligen Magnetfelder der beschädigten Laufschaufeln übereinstimmen, kann auch aus der Analyse des Referenzsignals entnommen werden. Die verschiedenen Ansätze, nämlich Aufnahme eines Referenzsignals für alle Laufschaufeln und Vergleich des Signals der Laufschaufeln untereinander können in geeigneter Weise kombiniert werden, um so die Auswertung des gemessenen zweiten Magnetfelds zu verbessern.

Die Erfindung betrifft ebenfalls ein System zum Detektieren in Laufschaufeln, die an einem in einem Gehäuse befindlichen Rotor einer Turbomaschine angebracht sind. Das System eignet sich grundsätzlich für verschiedene Turbomaschinen, besonders interessant ist es für Turbinen, vor allem für Dampfturbinen. Dieses System weist eine Magnetfelderzeugungseinrichtung zum Erzeugen eines ersten Magnetfelds auf. Die Magnetfelderzeugungseinrichtung ist im Gehäuse räumlich so angeordnet, dass durch das erste Magnetfeld in mindestens einer Laufschaufel im Betrieb der Turbomaschine Wirbelstrom induziert werden kann. Das System weist ferner eine Magnetfeldmesseinrichtung zum Messen des vom Wirbelstrom in der mindestens einen Laufschaufel hervorgerufenen zweiten Magnetfelds auf. Ferner weist das System eine Auswerteeinheit auf, die aus dem gemessenen zweiten Magnetfeld einen Riss in einer der Laufschaufeln feststellen kann und aus einer zusätzlich erfassten Phasenlage des Rotors ermitteln kann, in welcher Laufschaufel sich der Riss befindet.

Das System korrespondiert weitgehend mit dem oben geschilderten Verfahren. Zur Vermeidung von Wiederholungen erfolgt daher nur eine knappe Darstellung. Ein auszuführender Punkt, ist die räumliche Anordnung der Magnetfelderzeugungseinrichtung. Hier besteht die Forderung, dass durch das erste Magnetfeld in mindestens einer Laufschaufel im Betrieb der Turbomaschine ein Wirbelstrom induziert werden kann. Daraus folgt, dass eine gewisse Nähe von zu untersuchender Laufschaufel und Magnetfelderzeugungseinrichtung gegeben sein muss. Ferner muss die Magnetfelderzeugungseinrichtung so angeordnet sein, dass ein Betrieb der Turbomaschine möglich ist. Durch die Drehung der Laufschaufeln etwa darf die Magnetfelderzeugungseinrichtung nicht zerstört werden. Im Regelfall handelt es sich, wie bereits im Zusammenhang mit dem Verfahren erwähnt, bei Magnetfelderzeugungseinrichtung und der Magnetfeldmesseinrichtung um einen zur Materialprüfung bekannten Wirbelstromsensor. Meist sind die Magnetfelderzeugungseinrichtung und/oder die Magnetfeldmesseinrichtung durch jeweils eine Spule oder eine gemeinsame Spule gebildet.

Wirbelstromsensoren enthalten auch Mittel zur Abstandskompensation. Damit soll erreicht werden, dass eine Änderung des Abstands zwischen der zu untersuchenden Laufschaufel und dem Sensors nicht zu einem irreführenden Signal führt. Derartige Mittel zur Abstandskompensation sind im Stand der Technik bekannt und werden hier nicht näher erläutert.

Wie bereits angedeutet, ist in einer Ausführungsform des Systems das System so ausgebildet, dass es zur Durchführung des oben geschilderten Verfahrens und seiner verschiedenen Ausgestaltungsformen ausgebildet ist.

In einer Ausgestaltungsform des Systems ist vorgesehen, dass bei der räumlichen Anordnung der Magnetfelderzeugungseinrichtung und/oder der Magnetfeldmesseinrichtung berücksichtigt wird, an welcher Stelle in den Laufschaufeln ein Riss zu erwarten ist. Aufgrund der Auslegung der Laufschaufeln und zugehöriger Belastungsrechnungen kann die Stelle ermittelt werden, an der ein Riss zu erwarten ist. Das heißt freilich nicht, dass nur dort ein Riss auftreten kann. Da an dieser Stelle aber ein Riss am wahrscheinlichsten auftritt, ist es günstig die Magnetfelderzeugungseinrichtung und die Magnetfeldmesseinrichtung, also im Regelfall den erwähnten Wirbelstromsensor, entsprechend anzuordnen.

In einer weiteren Ausgestaltungsform, welche der oben beschriebenen sehr ähnlich ist, ist die Magnetfelderzeugungseinrichtung und/oder die Magnetfeldmesseinrichtung so angeordnet, dass ein Riss an der höchstbelasteten Stelle der Laufschaufeln festgestellt werden kann. Ein Riss ist am ehesten an der höchstbelasteten Stelle zu erwarten. Es gibt auch die Möglichkeit in einem Bereich der Laufschaufel eine sogenannte Sollbruchstelle vorzusehen. Es scheint zunächst widersinnig, eine Sollbruchstelle mit dem Ziel vorzusehen, dass ein Riss entsteht. Es kann allerdings sinnvoll sein die Laufschaufeln oder eine ausgewählte Laufschaufel so auszulegen, dass wenn ein Riss entsteht, dieser Riss an einer bestimmten Stelle entsteht. Dabei ist es sinnvoll die Sollbruchstelle so anzuordnen, dass ein Riss gut erkannt werden kann.

In einer weiteren Ausgestaltungsform des Systems ist die Magnetfelderzeugungseinrichtung und/oder die Magnetfeldmesseinrichtung räumlich in einem Abdampfbereich des Gehäuses angeordnet, sodass ein Riss auf der dem Abdampfbereich zugewandten Seite der an den Abdampfbereich anschließenden Laufschaufeln festgestellt werden kann. Dabei ist klar, dass sich diese Ausgestaltungsform des Systems für eine Dampfturbine eignet. Diese Ausgestaltungsform hat verschiedene Vorteile. Die an den Abdampfbereich sich anschließenden Laufschaufeln, also die Laufschaufeln die, folgt man dem Weg des Dampfes, als letzte vom Dampf angeströmt werden, sind im Allgemeinen am stärksten hinsichtlich Rissbildung belastet. Dies liegt unter anderem daran, dass diese Laufschaufeln relativ groß ausgeführt sind. Die Laufschaufeln sind hier deshalb größer als die anderen Laufschaufeln, da der Dampf in diesem Bereich bereits einen niedrigeren Druck hat und deshalb der Volumenstrom des Dampfes größer ist. Zudem ist es bei dem hier vorgeschlagenen System am leichtesten möglich, dort einen Riss festzustellen. Die Magnetfelderzeugungseinrichtung und/oder die Magnetfeldmesseinrichtung, also im Regelfall der Wirbelstromsensor, kann nur schwerlich in den Bereich angeordnet werden, in dem sich die Laufschaufeln unmittelbar befinden. Die Gefahr einer Beschädigung wäre häufig zu groß, wenngleich eine Befestigung etwa an einer Leitschaufel denkbar wäre. Im Abdampfbereich jedoch kann der Wirbelstromsensor befestigt werden. Damit kann ein Riss auf der dem Abdampfbereich zugewandten Seite der an den Abdampfbereich anschließenden Laufschaufeln festgestellt werden. Diese Seite wird häufig auch als die Austrittsstirnseite bezeichnet.

Handelt es sich bei der Turbomaschine um einen Verdichter, so ist entsprechend die Magnetfelderzeugungseinrichtung und/oder die Magnetfeldmesseinrichtung räumlich in einem Zufuhrbereich des Gehäuses angeordnet, sodass ein Riss auf der dem Zufuhrbereich zugewandten Seite der an den Zufuhrbereich anschließenden Laufschaufeln festgestellt werden kann.

Der Riss tritt häufig in dem Bereich des Schaufelfußes der Laufschaufeln, also in dem Bereich der Laufschaufeln, der nahe am Rotor liegt, auf. Daher sollte in vielen Fällen die Magnetfelderzeugungseinrichtung und/oder die Magnetfeldmesseinrichtung nahe am Rotor angebracht sein.

In einer Ausgestaltungsform des Systems kann der Riss bei einer Nenndrehzahl der Turbomaschine und/oder bei einer Turndrehzahl der Turbomaschine und/oder bei sich ändernder, insbesondere steigender, Drehzahl der Turbomaschine festgestellt werden. Mit dieser Anforderung soll berücksichtigt werden, dass es verschiedene Betriebszustände gibt, in denen eine Rissfeststellung erforderlich sein kann. Zum Einen ist dies die Nenndrehzahl der Turbomaschine, als diejenige Drehzahl, bei der die Turbomaschine im Normalbetrieb betrieben wird. Eine weitere Anforderung kann sein, dass die Rissdetektion bei der sogenannten Turndrehzahl möglich ist. Bei der Turndrehzahl handelt es sich um diejenige Drehzahl, mit der die Turbomaschine bei kurzfristigen Betriebsunterbrechungen weiter betrieben wird. Die im Leistungsbetrieb erwärmte Turbomaschine würde bei einem kompletten Turbomaschinenstillstand, also bei sich überhaupt nicht mehr drehender Turbomaschine dazu führen, dass während des Abkühlungsvorgangs sich die Laufschaufeln der Turbomaschine leicht verformen. Das zwar nur geringfügig aufgeweichte Material folgt während der Abkühlung der Schwerkraft. Durch eine langsame Drehung der Turbomaschine wird dieser Effekt ausgeglichen, da sich durch die Drehung der Turbomaschine die Richtung der Laufschaufeln relativ zur Schwerkraft ändert. Dieser Betrieb mit Turndrehzahl tritt häufig nach einer Abschaltung auf. Bei diesen Abschaltungen werden die Laufschaufeln mitunter stark belastet, sodass gerade in diesem Betriebszustand, der auf die Abschaltungen folgt, eine Überwachung auf Risse sinnvoll ist.

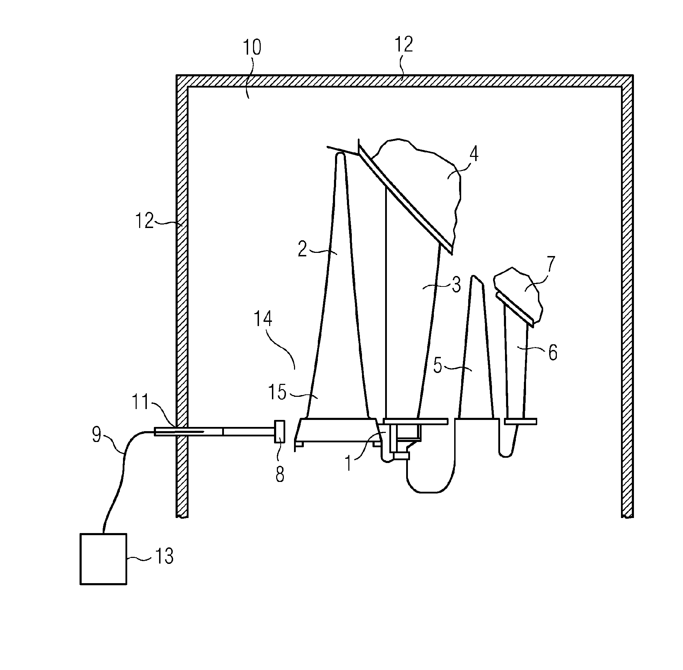

Weiterhin ist es sinnvoll, dass der Riss bei sich ändernder Drehzahl insbesondere bei steigender Drehzahl detektiert werden kann. Diese steigende Drehzahl tritt beim Anfahren der Turbomaschine auf. In diesem Betriebszustand können Risse entstehen. Werden diese rechtzeitig erkannt und das Anfahren der Turbomaschine beendet, so kann noch vor Auftreten eines Schadens die betroffene Laufschaufel ausgewechselt werden. Die Erfindung wird nachfolgend anhand der beigefügten Figur, welche schematisch einen Turbinenrotor mit Laufschaufeln und Leitschaufeln in einem Turbinengehäuse zeigt, erläutert.

Zu erkennen ist ein Rotor 1. An dem Rotor 1 ist eine Laufschaufel 2 befestigt. Neben der Laufschaufel 2 ist eine Leitschaufel 3 zu erkennen, die am Leitschaufelträger 4 angebracht ist. Daneben ist eine weitere Laufschaufel 5 und wiederum eine weitere Leitschaufel 6 zu erkennen, die an einem weiteren Leitschaufelträger 7 befestigt ist. Ferner ist ein Wirbelstromsensor 8 zu erkennen. Der Wirbelstromsensor 8 enthält eine Magnetfelderzeugungseinrichtung und eine Magnetfeldmesseinrichtung. Mit der Magnetfelderzeugungseinrichtung wird in der Laufschaufel 2 ein Wirbelstrom induziert. Der induzierte Wirbelstrom führt zu einem zweiten Magnetfeld, welches im Wirbelstromsensor 8 gemessen werden kann. Mittels einer Verkabelung 9, die aus dem Turbinengehäuse 10 in eine Durchführung 11 durch die Turbinengehäusewand 12 führt, werden die aus der Messung des zweiten Magnetfelds gewonnenen Signale zur Auswerteeinheit 13 geführt. In der Auswerteeinheit 13 erfolgt die Auswertung der Signale. Dabei wird das vom gemessenen zweiten Magnetfeld erhaltene Signal mit Referenzsignalen verglichen, die von einer oder mehreren nicht beschädigten Laufschaufeln 2 stammen.

Zum näheren Verständnis ist darzustellen, dass hier nur eine Laufschaufel in der Ebene senkrecht zum Rotor 1 gezeigt ist. In dieser Ebene befinden sich noch weitere, hier nicht dargestellte Laufschaufeln. Auch in diesen wird die oben beschriebene Messung durchgeführt.

In dem dargestellten Beispiel ist der Wirbelstromsensor im Abdampfbereich 14 befestigt. Damit kann die dem Abdampfbereich 14 zugewandte Laufschaufel 2 auf einen Riss hin untersucht werden. Die Laufschaufel 2 und die weiteren in dieser Ebene senkrecht zum Rotor 1 befindlichen Laufschaufeln sind die im stärksten belasteten Laufschaufeln, da sie am größten sind und daher die stärksten Zentrifugalkräfte wirken. Die Zentrifugalkräfte sind im Bereich des Schaufelfußes 15 am höchsten. Daher ist der Wirbelstromsensor auch nahe dem Schaufelfuß 15 angebracht.

Schließlich ist zu erwähnen, dass der Wirbelstromsensor 8 nicht auf der Rotorachse oder deren Verlängerung angebracht ist, wie es aus der schematischen Darstellung vielleicht erscheinen mag, sondern in einem geringen Abstand. Dies zunächst deshalb, weil dort kein Platz ist. Vielmehr führt dort die Turbinenwelle zur Lagerung ins Turbinengehäuse. Vor allem aber wäre dann nicht mehr zuordenbar, von welcher Laufschaufel das gemessene zweite Magnetfeld im wesentlichen herrührt, da alle an den Abdampfbereich 14 angrenzenden Laufschaufeln 2 gleichermaßen einen Beitrag liefern würden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Detektieren eines Risses in Laufschaufeln (2, 5), die an einem in einem Gehäuse (10) befindlichen Rotor (1) einer Turbomaschine, insbesondere einer Turbine angebracht sind, mit folgenden Schritten:
- Erzeugen eines ersten Magnetfelds, um in mindestens einer Laufschaufel im Betrieb der Turbomaschine einen Wirbelstrom zu induzieren;
- Messen des vom Wirbelstrom in der mindestens einen Laufschaufel (2, 5) induzierten zweiten Magnetfelds;
- Auswerten des gemessenen zweiten Magnetfelds, um einen Riss in einer der Laufschaufeln (2, 5) festzustellen;
aus einer zusätzlich erfassten Phasenlage des Rotors (1) ermitteln, in welcher Laufschaufel (2, 5) der Riss sich befindet.

2. Verfahren nach Anspruch 1,
**dadurch gekennzeichnet, dass**
eine Messung des zweiten Magnetfelds der Laufschaufeln (2, 5) ohne Riss vorgenommen wird, um ein Referenzsignal zu erhalten.

3. Verfahren nach Anspruch 2,
**dadurch gekennzeichnet, dass**
das Referenzsignal für verschiedene Turbomaschinendrehzahlen aufgenommen wird, so dass ein Vergleich des bei einer gewählten Turbomaschinendrehzahl gemessenen zweiten Magnetfelds mit einem Referenzsignal, das bei der gewählten Turbomaschinendrehzahl oder bei einer der gewählten Turbomaschinendrehzahl ähnlichen Turbomaschinendrehzahl gewonnen worden ist, möglich ist.

4. Verfahren nach einem der Ansprüche 1 bis 3,
**dadurch gekennzeichnet, dass**
das gemessene zweite Magnetfeld einer Laufschaufel (2, 5) mit dem gemessenen zweiten Magnetfeld mindestens einer weiteren Laufschaufel (2, 5) verglichen wird.

5. System zum Detektieren eines Risses in Laufschaufeln, die an einem in einem Gehäuse (10) befindlichen Rotor (1) einer Turbomaschine angebracht sind,
aufweisend
eine Magnetfelderzeugungseinrichtung (8) zum Erzeugen eines ersten Magnetfelds, die im Gehäuse (10) räumlich so angeordnet ist, dass durch das erste Magnetfeld in mindestens einer Laufschaufel (2, 5) im Betrieb der Turbomaschine ein Wirbelstrom induziert werden kann;
eine Magnetfeldmesseinrichtung (8) zum Messen des vom Wirbelstrom in der mindestens einen Laufschaufel (2, 5) hervorgerufenen zweiten Magnetfelds;
eine Auswerteeinheit (13), die aus dem gemessenen zweiten Magnetfeld einen Riss in einer der Laufschaufeln (2, 5) feststellen kann und aus einer zusätzlich erfassten Phasenlage des Rotors (1) ermitteln kann, in welcher Laufschaufel (2, 5) der Riss sich befindet.

6. System nach Anspruch 5,
**dadurch gekennzeichnet, dass**
es zur Ausführung des Verfahrens nach einem der Ansprüche 1 bis 4 ausgebildet ist.

7. System nach einem der Ansprüche 5 oder 6,
**dadurch gekennzeichnet, dass**
bei der räumlichen Anordnung der Magnetfelderzeugungseinrichtung (8) und/oder der Magnetfeldmesseinrichtung (8) berücksichtigt wird, an welcher Stelle in den Laufschaufeln (2, 5) ein Riss zu erwarten ist.

8. System nach einem der Ansprüche 5 bis 7,
**dadurch gekennzeichnet, dass**
die Magnetfelderzeugungseinrichtung (8) und/oder die Magnetfeldmesseinrichtung (8) so angeordnet ist, dass ein Riss an der höchstbelasteten Stelle der Laufschaufeln (2, 5) festgestellt werden kann.

9. System nach einem der der Ansprüche 5 bis 8,
**dadurch gekennzeichnet, dass**
die Magnetfelderzeugungseinrichtung (8) und/oder die Magnetfeldmesseinrichtung (8) räumlich so in einem Abdampfbereich (14) des Gehäuses angeordnet ist, dass ein Riss auf der dem Abdampfbereich zugewandten Seite der an den Abdampfbereich (14) anschließenden Laufschaufeln (2) festgestellt werden kann.

10. System nach einem der der Ansprüche 5 bis 9,
**dadurch gekennzeichnet, dass**
ein Riss an einem Schaufelfuß (15) der Laufschaufeln (2, 5) festgestellt werden kann.

11. System nach einem der der Ansprüche 5 bis 10,
**dadurch gekennzeichnet, dass**
der Riss bei einer Nenndrehzahl der Turbomaschine und/oder bei einer Turndrehzahl der Turbomaschine und/oder bei sich ändernder, insbesondere steigender, Drehzahl der Turbomaschine detektiert werden kann.
